# FASCICULE DE BREVET EUROPEEN

(11) **EP 2 820 689 B1**
(45) Date de publication et mention de la délivrance du brevet: **18.05.2016**
(21) Numéro de dépôt: 13712879.9
(22) Date de dépôt: 01.03.2013
(51) Int. Cl.: H01M 10/42, H01M 2/10, H01M 2/36

(54) **DISPOSITIF DE REMPLISSAGE PAR LES POMPIERS D'UNE BATTERIE DE TRACTION D'UN VEHICULE ELECTRIQUE OU HYBRIDE**
FÜLLVORRICHTUNG ZUR BRANDBEKÄMPFUNG IN DER ANTRIEBSBATTERIE EINES ELEKTRO- ODER HYBRIDFAHRZEUGS
FILLING DEVICE FOR FIREFIGHTERS OF A DRIVE BATTERY OF AN ELECTRIC OR HYBRID VEHICLE

(30) Priorité: 02.03.2012 FR 1251921
(43) Date de publication de la demande: 07.01.2015
(73) Titulaire: Renault S.A.S., 92100 Boulogne-Billancourt (FR)
(72) Inventeur: COHEN, Jonathan, F-92130 Issy-les-Moulineaux (FR); MULATO, Gilles, F-92320 Chatillon (FR)
(86) Numéro de dépôt international: PCT/FR2013/050442
(87) Numéro de publication internationale: WO 2013/128143

(56) Documents cités:
- DE-A1-102008 059 948

## Description

La présente invention concerne un véhicule comportant un agencement de moyens permettant le remplissage par les pompiers d'une batterie de traction dudit véhicule, notamment avec un fluide d'extinction comme de l'eau. Elle s'applique notamment, mais pas exclusivement, aux batteries Lithium-ion (Li-ion) alimentant la chaîne de traction des véhicules électriques ou hybrides.

De par leur tension élevée et leur forte densité d'énergie, les batteries Li-ion sont particulièrement adaptées pour alimenter la chaîne de traction d'un véhicule électrique ou hybride. Dans une telle batterie, une cellule Li-ion est un composant élémentaire qui renferme une certaine quantité d'électrolyte, qu'il s'agisse d'un électrolyte solide ou liquide, à travers lequel peuvent migrer des ions de lithium entre une cathode et une anode, afin de stocker ou de délivrer de l'énergie électrique. Une pluralité de cellules Li-ion sont d'abord assemblées et connectées en série et/ou en parallèle pour former un module, puis une pluralité de modules sont assemblés et connectés en série et/ou en parallèle pour former un « pack » selon la terminologie anglo-saxonne.

Compte tenu des multiples dispositifs de sécurité mis en oeuvre par la demanderesse pour prévenir et empêcher les surcharges de tension aux bornes des cellules électrochimiques, il est très hautement improbable que le contenu d'un pack s'enflamme de lui-même spontanément. Par contre, en cas d'incendie du véhicule tout entier, qu'il s'agisse d'un incendie suite à un accident de la route ou suite à un acte de vandalisme, le très fort dégagement de chaleur à proximité du pack peut déclencher un phénomène d'emballement thermique à l'intérieur des cellules électrochimiques. Celles-ci peuvent alors s'enflammer à leur tour à l'intérieur du pack, dès lors qu'elles franchissent un seuil de température. S'agissant d'un feu d'origine chimique, il est très difficile à éteindre, surtout si l'on considère qu'il est confiné dans l'enceinte formé par le pack.

En effet, les packs actuels sont quasiment clos hermétiquement, notamment lorsqu'ils sont équipés d'un circuit de refroidissement permettant de faire circuler dans le pack un fluide caloporteur. C'est par exemple le cas des packs disposés à l'intérieur du véhicule dans un logement mal ventilé. Seuls les entrées et sorties du circuit de refroidissement autorisent l'accès à l'intérieur du pack via des orifices aux dimensions réduites et d'accès difficile voire incertain, surtout après un incendie du véhicule.

D'autres packs, notamment lorsqu'ils sont disposés sur les véhicules à des emplacements particulièrement bien ventilés, par exemple à plat à l'extérieur sous la caisse du véhicule comme sur un véhicule de type Kangoo ZE (marque déposée par la demanderesse), sont dépourvus de circuit de refroidissement mais équipés de soupapes afin d'éviter les surpressions à l'intérieur du pack. Là encore, les orifices laissés par les soupapes après l'incendie du véhicule sont de dimensions réduites et d'accès difficile voire impossible dans certaines architecture.

Le document DE102008059948 décrit un pack de batterie dans lequel ce dernier est relié à un réservoir contenant un fluide d' extinction au moyen d' une conduite.

L'invention a notamment pour but d'autoriser l'accès à l'intérieur du pack d'une batterie d'un véhicule incendié, de manière à permettre aux pompiers de noyer ses cellules électrochimiques dans une grande quantité d'eau. A cet effet, l'invention a pour objet un véhicule comportant un pack de batterie, notamment une batterie de traction. Une première trappe est disposée sur une paroi du pack et donne accès à l'intérieur du pack. La trappe comporte des moyens d'obturation totale ou partielle, ces moyens étant amovibles ou fusibles sous l'effet de la température. Une seconde trappe disposée sur un élément de la caisse du véhicule en regard de la première trappe, de sorte que la seconde trappe donne l'accès à la première trappe. Un fluide d'extinction peut être introduit dans le pack au travers des deux trappes dès lors que les moyens d'obturation de la première trappe ont été enlevés ou ont fondu.

Dans un mode de réalisation, les moyens d'obturation de la première trappe peuvent inclure une zone de diminution de l'épaisseur de la paroi du pack, cette zone étant apte à être défoncée par action mécanique.

Dans un autre mode de réalisation, les moyens d'obturation de la première trappe peuvent inclure un obturateur constitué au moins partiellement d'un matériau apte à fondre sous l'effet de la température, l'obturateur pouvant avantageusement inclure une soupape ou un manchon de raccordement.

Avantageusement, la seconde trappe peut comporter une grille isolant l'intérieur de la caisse des perturbations électromagnétiques issues de la première trappe, tout en étant apte à laisser passer le fluide d'extinction. Par exemple, la grille peut être intégrée à la matrice d'emboutissage de la tôle de la caisse.

Préférentiellement, la seconde trappe peut également comporter des moyens d'obturation amovibles ou fusibles sous l'effet de la température, par exemple un Insonorisant Fusible en Feuille (IFF).

Dans un mode de réalisation avantageux, la batterie peut être disposée sous le coffre du véhicule, la première trappe pouvant être agencée sur le dessus du pack et la seconde trappe pouvant être agencée sur le plancher du coffre en regard de la première trappe.

La présente invention a pour principal avantage d'être simple et peu coûteuse à mettre en oeuvre dès lors qu'elle est prise en compte dès la conception du véhicule.

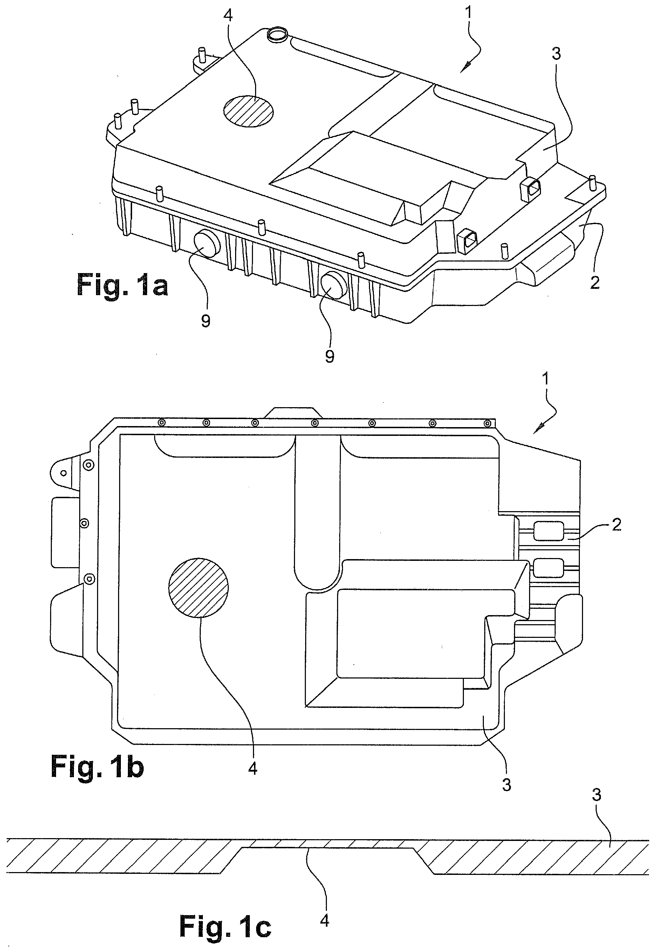

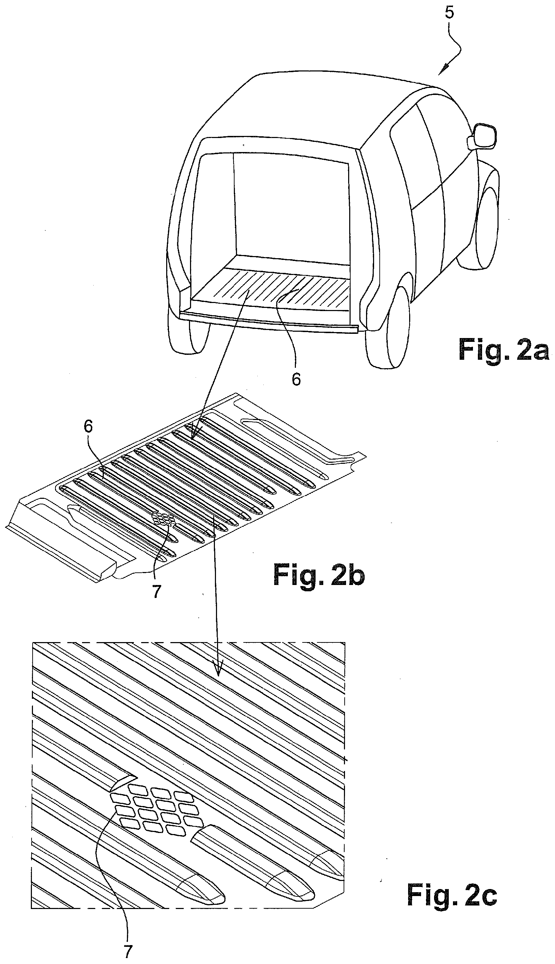

D'autres caractéristiques et avantages de l'invention apparaîtront à l'aide de la description qui suit faite en regard des figures 1a, 1b, 1c, 2a, 2b et 2c annexées, qui illustrent, par différentes vues, un exemple de réalisation de l'invention sur un véhicule utilitaire de type Kangoo ZE (marque déposée par la demanderesse).

Les figures 1 a et 1 b illustrent, par une vue en perspective et par une vue de dessus respectivement, un pack 1 pour ce type de véhicule. Le pack 1 est essentiellement constitué par un fond 2 en aluminium fermé par un couvercle 3 en aluminium également. Le fond 2 comporte deux soupapes 9 permettant de maintenir l'équilibre de pression entre l'intérieur du pack 1 et l'extérieur. Non illustrés sur les figures, le pack 1 renferme l'ensemble des éléments nécessaires au stockage de l'énergie électrique, à savoir 2 modules de 24 cellules électrochimiques interconnectées, ainsi que l'ensemble des éléments nécessaires à leur branchement dans le circuit de traction du véhicule. Le pack 1 renferme aussi des composants électroniques de contrôle et de sécurité, notamment un « Battery Management System » (BMS) selon une terminologie anglo-saxonne. Conformément à la présente invention, une première trappe 4 est agencée sur le dessus du couvercle 3, ouvrant ainsi l'accès à l'intérieur du pack 1 pour y introduire un fluide d'extinction sous pression, de l'eau par exemple. La trappe 4 peut par exemple avoir sensiblement la forme d'un disque de quelques centimètres de diamètre.

Dans la présente demande, et comme illustré par les exemples de réalisation qui suivent, le terme « trappe » doit s'entendre de manière non restrictive comme englobant n'importe quel type d'ouverture équipée de moyens d'obturation.

Ainsi, la figure 1c illustre, par une vue en coupe, un mode de réalisation de l'invention dans lequel la trappe 4 peut être réalisée par diminution locale de l'épaisseur du couvercle 3. Cette diminution d'épaisseur constitue un obturateur à la trappe 4, obturateur dont la faiblesse est telle qu'il peut être défoncé localement par simple action mécanique avec un outil du type marteau, ouvrant ainsi l'accès à l'intérieur du pack 1 pour y introduire un fluide d'extinction sous pression.

Dans un autre mode de réalisation, la trappe 4 pourrait également être formée par un trou circulaire percé dans le couvercle 3, ce trou pouvant être occulté par un obturateur constitué au moins partiellement d'un matériau pouvant fondre sous l'effet de la température en cas d'incendie, comme du plastique par exemple, ouvrant ainsi l'accès à l'intérieur du pack 1 pour y introduire un fluide d'extinction sous pression. Par exemple, un matériau plastique fondant à 300°C peut être choisi.

Il apparaît clairement des exemples de réalisation cités précédemment que les moyens d'obturation de la trappe 4 peuvent être de différentes sortes. Ils peuvent notamment être dédiés à la fonction d'obturation, auquel cas ils assurent une obturation totale de la trappe 4 comme dans les deux exemples de réalisation qui précèdent, où la trappe 4 est close sensiblement hermétiquement. Mais dans d'autres modes de réalisation de l'invention, les moyens d'obturation de la trappe 4 peuvent également assurer des fonctions supplémentaires. Ainsi, l'obturateur en plastique peut par exemple assurer la fonction de soupape à la place des soupapes 9 ou encore la fonction de manchon de raccordement pour la circulation d'un fluide de refroidissement dans le pack 1, auquels cas les moyens d'obturation n'assurent qu'une obturation partielle, l'air ou le fluide de refroidissement pouvant traverser la soupape ou le manchon respectivement.

Les figures 2a, 2b et 2c illustrent, par des vues en perspective, la caisse d'un véhicule utilitaire 5 de type Kangoo ZE (marque déposée par la demanderesse) dont le plancher 6 du coffre de chargement comporte une seconde trappe 7 agencée en regard de la première trappe 4, le pack 1 comportant la trappe 4 n'étant pas visible sur les figures car disposé sous la caisse du véhicule 5. Ainsi disposée, la trappe 7 crée un accès à la trappe 4 et donc à l'intérieur du pack 1 pour y introduire un fluide d'extinction sous pression. Dans l'exemple de réalisation des figures 2a, 2b et 2c, la trappe 7 peut comporter une grille, dès lors que cette grille n'empêche pas le passage du fluide d'extinction.

Dans l'exemple de réalisation des figures 2a, 2b et 2c, la trappe 7 est même formée par une pluralité de trous contigus percés dans la caisse, le percement de cette grille pouvant être intégrée à la matrice d'emboutissage de la tôle de caisse. Car d'une part, la mise en oeuvre est plus facile lorsque la contrainte est prise en amont du projet par des procédés connus et elle donne la possibilité de garder les géométries structurantes de renforcement du véhicule, notamment les nervures de rigidité de la caisse. Et d'autre part, une pluralité de trous dans la caisse du véhicule 5 au lieu d'un seul confère une meilleure protection physique aux contraintes de chargement, notamment dans le cas d'un véhicule utilitaire.

Avantageusement, la grille peut constituer une isolation contre les perturbations électromagnétiques émises par les cellules électrochimiques à travers l'obturateur de la trappe 4 en direction de la trappe 7, ceci sans empêcher l'introduction d'un fluide d'extinction sous pression. Il faut noter que, dans le cas d'une première trappe 4 dont l'obturateur est formé par diminution locale de l'épaisseur du couvercle, une seconde trappe 7 comportant une grille n'est ni utile ni compatible. Elle n'est pas utile car une trappe dont l'obturateur est formé par diminution locale de l'épaisseur du couvercle constitue en elle-même une isolation contre les perturbations électromagnétiques. Elle n'est pas compatible car la grille empêcherait d'exercer l'action mécanique pour défoncer localement l'obturateur. La trappe 7 comportant une grille est donc préférée lorsque la trappe est 4 formée par un trou circulaire occulté par un obturateur en matière plastique. Si l'obturateur de la trappe 4 est formé par diminution locale de l'épaisseur du couvercle 3, alors la trappe 7 peut être formée par un seul trou circulaire d'un diamètre de l'ordre de quelques centimètres, autorisant ainsi l'exercice d'une action mécanique avec un marteau par exemple pour défoncer localement l'obturateur de la trappe 4.

Avantageusement également, la trappe 7, qu'elle comporte une grille ou pas, peut être occultée par une couche de protection superficielle passée en peinture comme un IFF, cette couche n'étant pas illustrée sur les figures, qui peut protéger contre toute intrusion dans le coffre du véhicule 5 de liquides, poussières, ou tout corps étranger. D'encombrement très réduit et de coût très faible, une telle couche peut fondre sous l'effet de la température en cas d'incendie, libérant ainsi l'accès à la trappe 7. Par exemple, une couche fondant à 300°C peut être choisie.

Il faut noter que la présente invention peut être mise en oeuvre aussi facilement dans un véhicule classique que dans un véhicule utilitaire, les sièges et autres éléments d'habillage intérieur disparaissant sous l'effet du feu et de la température, libérant ainsi la seconde trappe quel que soit son emplacement sur la caisse.

Outre de permettre aux pompiers de noyer très rapidement les cellules électrochimiques dans une grande quantité d'eau, l'invention a donc encore pour principal avantage qu'elle est peu coûteuse à mettre en oeuvre dès lors qu'elle est prise en compte dès la conception du véhicule, l'invention ne nécessitant que des procédés éprouvés.

## Revendications

1. Véhicule (5) électrique ou hybride comportant un pack (1) d'une batterie, le véhicule étant **caractérisé en ce que** :
- une première trappe (4) est disposée sur une paroi (3) du pack et donne accès à l'intérieur du pack, la trappe comportant des moyens d'obturation totale ou partielle, lesdits moyens étant amovibles ou fusibles sous l'effet de la température ;
- une seconde trappe (7) est disposée sur un élément (6) de la caisse du véhicule en regard de la première trappe, de sorte que ladite seconde trappe donne l'accès à la première trappe, un fluide d'extinction pouvant être introduit dans le pack au travers des deux trappes dès lors que les moyens d'obturation de la première trappe ont été enlevés ou ont fondu.

2. Véhicule (5) selon la revendication 1, **caractérisé en ce que** les moyens d'obturation de la première trappe (4) incluent une zone de diminution de l'épaisseur de la paroi (3) du pack (1), cette zone étant apte à être défoncée par action mécanique.

3. Véhicule (5) selon la revendication 1, **caractérisé en ce que** les moyens d'obturation de la première trappe (4) incluent un obturateur constitué au moins partiellement d'un matériau apte à fondre sous l'effet de la température.

4. Véhicule (5) selon la revendication 3, **caractérisé en ce que** l'obturateur inclut une soupape.

5. Véhicule (5) selon la revendication 3, **caractérisé en ce que** l'obturateur inclut un manchon de raccordement.

6. Véhicule (5) selon la revendication 3, **caractérisé en ce que** la seconde trappe (7) comporte une grille, ladite grille isolant l'intérieur de la caisse des perturbations électromagnétiques issues de la première trappe (4) tout en étant apte à laisser passer le fluide d'extinction.

7. Véhicule (5) selon la revendication 6, **caractérisé en ce que** la grille est intégrée à la matrice d'emboutissage de la tôle de la caisse.

8. Véhicule (5) selon l'une quelconque des revendications précédentes, **caractérisé en ce que** la seconde trappe (7) comporte des moyens d'obturation amovibles ou fusibles sous l'effet de la température.

9. Véhicule (5) selon la revendication 8, **caractérisé en ce que** les moyens d'obturation de la seconde trappe (7) incluent un Insonorisant Fusible en Feuille.

10. Véhicule (5) selon la revendication 1, **caractérisé en ce que**, la batterie étant disposée sous le coffre dudit véhicule, la première trappe (4) est agencée sur le dessus du pack (1) et la seconde trappe (7) est agencée sur le plancher du coffre en regard de la première trappe.

## Patentansprüche

1. Elektro- oder Hybridfahrzeug (5), umfassend ein Pack (1) einer Batterie, wobei das Fahrzeug **dadurch gekennzeichnet ist, dass**:
- eine erste Klappe (4) an einer Wand (3) des Packs angeordnet ist und Zugang zum Inneren des Packs bietet, wobei die Klappe Mittel zum vollständigen oder teilweisen Verschließen aufweist, wobei die Mittel abnehmbar oder unter der Einwirkung der Temperatur schmelzbar sind;
- eine zweite Klappe (7) auf einem Element (6) der Karosserie des Fahrzeugs gegenüber der ersten Klappe derart angeordnet ist, dass die zweite Klappe Zugang zu der ersten Klappe bietet, wobei ein Löschfluid in das Pack über die zwei Klappen eingeführt werden kann, sobald die Mittel zum Verschließen der ersten Klappe abgenommen worden sind oder geschmolzen sind.

2. Fahrzeug (5) nach Anspruch 1, **dadurch gekennzeichnet, dass** die Mittel zum Verschließen der ersten Klappe (4) einen Bereich der Verringerung der Dicke der Wand (3) des Packs (1) aufweisen, wobei dieser Bereich geeignet ist, durch mechanische Einwirkung eingedrückt zu werden.

3. Fahrzeug (5) nach Anspruch 1, **dadurch gekennzeichnet, dass** die Mittel zum Verschließen der ersten Klappe (4) einen Verschluss aufweisen, der mindestens teilweise aus einem Material gebildet ist, das geeignet ist, unter der Einwirkung der Temperatur zu schmelzen.

4. Fahrzeug (5) nach Anspruch 3, **dadurch gekennzeichnet, dass** der Verschluss ein Ventil aufweist.

5. Fahrzeug (5) nach Anspruch 3, **dadurch gekennzeichnet, dass** der Verschluss eine Verbindungsmuffe aufweist.

6. Fahrzeug (5) nach Anspruch 3, **dadurch gekennzeichnet, dass** die zweite Klappe (7) ein Gitter aufweist, wobei das Gitter das Innere der Karosserie von den elektromagnetischen Störungen isoliert, die aus der ersten Klappe (4) stammen, und dabei geeignet ist, das Löschfluid durchgehen zu lassen.

7. Fahrzeug (5) nach Anspruch 6, **dadurch gekennzeichnet, dass** das Gitter in der Ziehmatrize des Bleches der Karosserie integriert ist.

8. Fahrzeug (5) nach einem der vorhergehenden Ansprüche, **dadurch gekennzeichnet, dass** die zweite Klappe (7) Mittel zum Verschließen aufweist, die abnehmbar oder unter der Einwirkung der Temperatur schmelzbar sind.

9. Fahrzeug (5) nach Anspruch 8, **dadurch gekennzeichnet, dass** die Mittel zum Verschließen der zweiten Klappe (7) eine schmelzbare Schalldämmungsfolie aufweisen.

10. Fahrzeug (5) nach Anspruch 1, **dadurch gekennzeichnet, dass** die Batterie unter dem Kofferraum des Fahrzeugs angeordnet ist, wobei die erste Klappe (4) auf der Oberseite des Packs (1) angeordnet ist und die zweite Klappe (7) auf dem Boden des Kofferraums gegenüber der ersten Klappe angeordnet ist.

## Claims

1. Electric or hybrid vehicle (5) having a battery pack (1), the vehicle being **characterized in that**:
- a first port (4) is positioned on a wall (3) of the pack and gives access to the inside of the pack, the port having total or partial blocking means, said means being removable or meltable under the effect of heat; and
- a second port (7) is positioned on a member (6) of the body of the vehicle facing the first port, in such a way that said second port gives access to the first port, an extinguishing fluid being introducible into the pack through the two ports as soon as the blocking means of the first port have been removed or have melted.

2. Vehicle (5) according to Claim 1, **characterized in that** the blocking means of the first port (4) include an area of reduced thickness of the wall (3) of the pack (1), this area being breakable by mechanical action.

3. Vehicle (5) according to Claim 1, **characterized in that** the blocking means of the first port (4) include a blocking piece composed at least partially of a material which is meltable under the effect of heat.

4. Vehicle (5) according to Claim 3, **characterized in that** the blocking piece includes a valve.

5. Vehicle (5) according to Claim 3, **characterized in that** the blocking piece includes a coupling sleeve.

6. Vehicle (5) according to Claim 3, **characterized in that** the second port (7) includes a grating, said grating isolating the inside of the body from electromagnetic disturbances emitted from the first port (4), while allowing the extinguishing fluid to pass through.

7. Vehicle (5) according to Claim 6, **characterized in that** the grating is incorporated in the sheet metal stamping die for the body.

8. Vehicle (5) according to any of the preceding claims, **characterized in that** the second port (7) includes blocking means which are removable or meltable under the effect of heat.

9. Vehicle (5) according to Claim 8, **characterized in that** the blocking means of the second port (7) include a fusible soundproofing sheet.

10. Vehicle (5) according to Claim 1, **characterized in that**, the battery being placed under the trunk of said vehicle, the first port (4) is positioned on top of the pack (1) and the second port (7) is positioned on the floor of the trunk, facing the first port.
